# EUROPEAN PATENT APPLICATION

(11) **EP 4 582 302 A1**
(43) Date of publication of application: **09.07.2025**
(21) Application number: 24217675.8
(22) Date of filing: 05.12.2024
(51) Int. Cl.: B60L 53/65, B60L 53/80, B60L 58/12, B60K 1/04, B60L 3/00, B60L 3/12, B60L 50/60, B60L 53/30, B60L 53/66, B60L 58/16, B60S 5/06, G06Q 50/06, H01M 50/244, H01M 50/249

(54) **BATTERY SWAP SYSTEM, VEHICLE-SIDE CONTROL DEVICE, AND BATTERY SELECTION METHOD**

(30) Priority: 08.12.2023 JP 2023207656
(71) Applicant: TOYOTA JIDOSHA KABUSHIKI KAISHA, Aichi-ken, 471-8571 (JP)
(72) Inventor: ICHIKAWA, Shinji, Toyota-shi, 471-8571 (JP)
(74) Representative: TBK

(57) **Abstract**

A battery swap system (1) includes a vehicle-side control device (203) and a battery swap apparatus (100). The battery swap apparatus (100) has at least one replacement battery (101) in stock, and is configured to swap out a first battery (201) installed in a vehicle (200) for a second battery (101) out of the at least one replacement battery (101). The vehicle-side control device (203) is configured to select the second battery (101) from the at least one replacement battery (101) using battery installation information, electrical requirement information, and battery information. The battery installation information is information regarding either or both of a battery installation position and a battery placement direction in the vehicle (200). The electrical requirement information is information regarding electrical characteristics required of the second battery (101).

## Description

### BACKGROUND OF THE INVENTION

### 1. Field of the Invention

The present disclosure relates to battery swap systems, vehicle-side control devices, and battery selection methods.

### 2. Description of Related Art

Japanese Unexamined Patent Application Publication No. 2014-003803 (JP 2014-003803 A) discloses a battery swap method for battery electric vehicles and battery charging stations. When the remaining battery capacity of a battery electric vehicle becomes low, the battery electric vehicle requests battery information from a battery charging station located on its travel route. At this time, the battery electric vehicle sends information such as the type of its battery to the battery charging station. In response to the request for battery information, the battery charging station sends information on whether a reservation for battery swapping is available to the battery electric vehicle.

### SUMMARY OF THE INVENTION

In the battery swap method described in JP 2014-003803 A, a battery electric vehicle sends information on the type of its battery etc. to a battery charging station. Therefore, the battery charging station is considered to select a replacement battery based on the type of the battery etc. There is room for further improvement in terms of reducing the possibility that a battery not suitable for a target battery electric vehicle may be selected for swapping.

The present disclosure provides a battery swap system, vehicle-side control device, and battery selection method that reduce the possibility that a battery not suitable for a target vehicle may be used for swapping.

A battery swap system according to a first aspect of the present disclosure includes a vehicle-side control device and a battery swap apparatus. The vehicle-side control device is configured to select a second battery to be swapped with a first battery installed in a vehicle. The battery swap apparatus has at least one replacement battery in stock, and is configured to swap out the first battery for the second battery out of the at least one replacement battery. The vehicle-side control device is configured to receive battery information regarding the at least one replacement battery from outside. The vehicle-side control device is configured to select the second battery from the at least one replacement battery using battery installation information, electrical requirement information, and the battery information. The battery installation information is information regarding either or both of a battery installation position and a battery placement direction in the vehicle. The electrical requirement information is information regarding an electrical characteristic required of the second battery.

As described above, in the battery swap system according to the first aspect of the present disclosure, the vehicle-side control device selects the second battery from the at least one replacement battery using the battery installation information, the electrical requirement information, and the battery information. The second battery suitable for the vehicle can thus be selected based on the battery installation information and the electrical requirement information. As a result, the possibility is reduced that a battery not suitable for the vehicle may be used for swapping.

In the battery swap system according to the first aspect, the electrical requirement information may include information on a voltage, an output power, and a capacity that are required of the second battery. The vehicle-side control device may be configured to select the second battery from the at least one replacement battery based on the following factors in the following priority order, from highest to lowest: (i) the battery installation information, (ii) the information on the voltage, (iii) either the information on the output power or the information on the capacity, and (iv) either the information on the output power or the information on the capacity, whichever is not the information of (iii). The battery installation information is related to whether the second battery can be installed in the vehicle. The information on the voltage is related to whether the vehicle can be driven. The information on the output power is related to the driving force of the vehicle. The information on the capacity (remaining capacity) is related to the driving range of the vehicle. Accordingly, setting the priorities of the above factors as described above allows to prioritize the above factors in order of the degree to which each factor is required of the second battery.

In the battery swap system according to the first aspect, the vehicle-side control device may be configured to send the battery installation information and the electrical requirement information to the battery swap apparatus. The battery swap apparatus may be configured to send to the vehicle-side control device the battery information regarding the at least one replacement battery that matches either or both of the battery installation information and the electrical requirement information both received from the vehicle. The vehicle-side control device may be configured to select the second battery from the at least one replacement battery using the battery information received from the battery swap apparatus, the battery installation information, and the electrical requirement information. With the above configuration, the vehicle-side control device can select the second battery from the at least one replacement battery that matches either or both of the battery installation information and the electrical requirement information. This can reduce the burden of the selection process that is performed by the vehicle-side control device and the time required for the selection process, compared to the case where the second battery is selected from all the replacement batteries that are in stock in the battery swap apparatus.

A vehicle-side control device according to a second aspect of the present disclosure is configured to select a second battery to be swapped with a first battery installed in a vehicle. The vehicle-side control device includes a communicator and a controller. The communicator is configured to receive battery information regarding at least one replacement battery that is in stock in a battery swap apparatus from outside. The controller is configured to select the second battery from the at least one replacement battery using battery installation information, electrical requirement information, and the battery information. The battery installation information is information regarding either or both of a battery installation position and a battery placement direction in the vehicle. The electrical requirement information is information regarding an electrical characteristic required of the second battery.

As described above, the vehicle-side control device according to the second aspect of the present disclosure selects the second battery from the at least one replacement battery using the battery installation information, the electrical requirement information, and the battery information. It is therefore possible to provide the vehicle-side control device that reduces the possibility that a battery not suitable for the vehicle may be used for swapping.

In the vehicle-side control device according to the second aspect, the electrical requirement information may include information on a voltage, an output power, and a capacity that are required of the second battery. The controller may be configured to select the second battery from the at least one replacement battery based on the following factors in the following priority order, from highest to lowest: (i) the battery installation information, (ii) the information on the voltage, (iii) either the information on the output power or the information on the capacity, and (iv) either the information on the output power or the information on the capacity, whichever is not the information of (iii). With this configuration, it is possible to provide the vehicle-side control device that can select the second battery based on the above factors prioritized in order of the degree to which each factor is required of the second battery.

In the vehicle-side control device according to the second aspect, the communicator may be configured to send the battery installation information and the electrical requirement information to outside the vehicle. With the above configuration, the battery swap apparatus can easily acquire the battery installation information and the electrical requirement information from the outside.

A battery selection method according to a third aspect of the present disclosure is performed by a vehicle-side control device configured to select a second battery to be swapped with a first battery installed in a vehicle. The battery selection method includes receiving battery information regarding at least one replacement battery that is in stock in a battery swap apparatus. The battery selection method further includes selecting the second battery from the at least one replacement battery using battery installation information, electrical requirement information, and the battery information. The battery installation information is information regarding either or both of a battery installation position and a battery placement direction in the vehicle. The electrical requirement information is information regarding an electrical characteristic required of the second battery.

As described above, in the battery selection method according to the third aspect of the present disclosure, the second battery is selected from the at least one replacement battery using the battery installation information, the electrical requirement information, and the battery information. It is therefore possible to provide the battery selection method that reduces the possibility that a battery not suitable for the vehicle may be used for swapping.

The present disclosure reduces the possibility that a battery not suitable for a target vehicle may be used for swapping.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows the configuration of a battery swap system according to an embodiment;
FIG. 2 is a sequence diagram showing control that is performed by the battery swap system according to the embodiment;
FIG. 3 is a flowchart showing a detailed process of step S90 in FIG. 2; and
FIG. 4 is a sequence diagram showing control that is performed by a battery swap system according to a modification of the embodiment.

### DETAILED DESCRIPTION OF EMBODIMENTS

An embodiment of the present disclosure will be described in detail below with reference to the drawings. The same or corresponding parts are denoted by the same signs throughout the drawings, and description thereof will not be repeated.

### Configuration of Battery Swap System

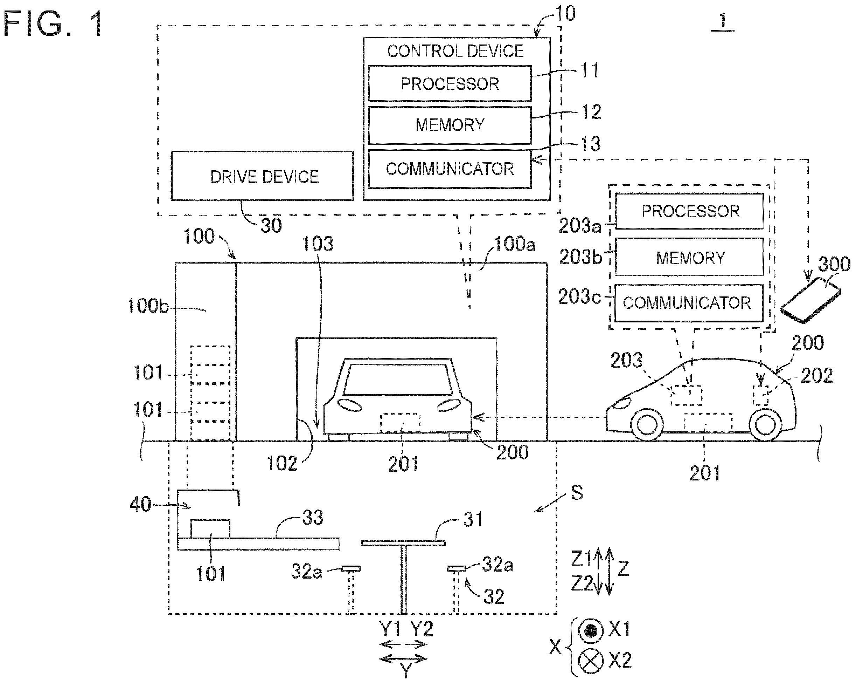

FIG. 1 shows a battery swap system 1 including a battery swap apparatus 100 and an electrified vehicle 200 according to an embodiment. The electrified vehicle 200 is an example of the "vehicle" in the present disclosure.

The electrified vehicle 200 includes a battery 201, a communication device 202, and an electronic control unit (ECU) 203. The electrified vehicle 200 is, for example, a plug-in hybrid electric vehicle (PHEV), a battery electric vehicle (BEV), or a fuel cell electric vehicle (FCEV).

The battery 201 stores electric power to be used to drive the electrified vehicle 200. The communication device 202 is configured to communicate with a communication device located outside the electrified vehicle 200. The communication device 202 includes, for example, a Data Communication Module (DCM). The ECU 203 controls various systems in the electrified vehicle 200. The communication device 202 and the ECU 203 are an example of the "communicator" and "vehicle-side control device" of the present disclosure, respectively.

The ECU 203 includes a processor 203a, a memory 203b, and a communicator 203c. The memory 203b stores programs to be executed by the processor 203a and information to be used in the programs (e.g., maps, mathematical expressions, and various parameters). The communicator 203c is configured to communicate with the communication device 202 etc. through a vehicle network (such as control area network (CAN) communication). This allows the processor 203a to send and receive information to and from the outside of the electrified vehicle 200 via the communication device 202 and the communicator 203c. The processor 203a and the communicator 203c are an example of the "controller" and "communicator" of the present disclosure, respectively.

The battery swap apparatus 100 includes a battery swap apparatus body 100a where battery swapping is performed, and a storage 100b where a battery 101 is stored. The battery swap apparatus body 100a is an apparatus that performs battery swapping, namely swaps out the battery 201 installed in the electrified vehicle 200 for the battery 101. The storage 100b is annexed to the battery swap apparatus body 100a. The battery swap apparatus 100 (battery swap apparatus body 100a) has an entrance and exit 102 through which the electrified vehicle 200 enters and exits the battery swap apparatus 100 (battery swap apparatus body 100a). The battery 101 is an example of the "replacement battery" and the "second battery" of the present disclosure. The battery 201 is an example of the "first battery" of the present disclosure.

The battery 101 stored in the storage 100b is moved to a temporary storage area 40 in an underfloor area U, and is then transported to the electrified vehicle 200. A battery table 31, a lifting unit 32, and a transport unit 33, which will be described later, are installed in the underfloor area S.

The battery swap apparatus 100 (battery swap apparatus body 100a) includes a control device 10 and a drive device 30. The drive device 30 includes the battery table 31, the lifting unit 32, and the transport unit 33.

The control device 10 includes a processor 11, a memory 12, and a communicator 13. The memory 12 stores programs to be executed by the processor 11 and information to be used in the programs (e.g., maps, mathematical expressions, and various parameters). The processor 11 controls the drive device 30.

The communicator 13 includes various communication interfaces (I/Fs). The processor 11 controls the communicator 13. The communicator 13 communicates with the communication device 202 of the electrified vehicle 200 etc. Bidirectional communication is possible between the communicator 13 and the electrified vehicle 200 (communication device 202). The communicator 13 is also configured to communicate with a mobile terminal 300 owned by a user of the electrified vehicle 200. The present embodiment illustrates an example in which various types of information are transferred between the communication device 202 of the electrified vehicle 200 and the communicator 13 of the battery swap apparatus 100.

A vehicle stop area 103 is provided in the battery swap apparatus 100. When the user instructs to start battery swap work by operating a navigation system, not shown, of the electrified vehicle 200 with the electrified vehicle 200 stopped in the vehicle stop area 103, the communicator 13 receives an instruction signal to start battery swap work from the electrified vehicle 200. When the communicator 13 receives the instruction signal, the processor 11 starts controlling the battery swap work that is performed by the drive device 30.

The lifting unit 32 lifts and lowers the electrified vehicle 200 by moving up and down the electrified vehicle 200 while holding it from below. The lifting unit 32 includes a pair of lifting bars 32a. The electrified vehicle 200 is supported from below by the lifting bars 32a. Battery swapping (battery removal and installation) is performed with the electrified vehicle 200 held horizontally by the lifting bars 32a.

The battery table 31 is configured to move up and down in the Z direction. The battery table 31 is moved up to a position as high as the bottom of the electrified vehicle 200, and the battery 201 removed from the electrified vehicle 200 is placed on the battery table 31. The battery table 31 with the battery 101 placed thereon is moved up to the position as high as the bottom of the electrified vehicle 200, and the battery 101 is installed in the electrified vehicle 200.

The transport unit 33 is configured to transport the battery (101, 201). Specifically, the transport unit 33 transports the battery 201 removed from the electrified vehicle 200 and placed on the battery table 31 to the temporary storage area 40. The transport unit 33 also transports the battery 101 transported from the storage 100b to the temporary storage area 40 to the battery table 31.

In the conventional system, information such as the type of the battery installed in an electrified vehicle is sent from the electrified vehicle to a battery swap apparatus. Therefore, the battery swap apparatus is considered to select a replacement battery based on the type of the battery etc. There is room for further improvement in terms of reducing the possibility that a battery not suitable for a target electrified vehicle may be selected for swapping.

In the present embodiment, the ECU 203 of the electrified vehicle 200 selects a battery 101 to be used for swapping by using battery installation information, electrical requirement information, and battery information regarding each battery 101 that is in stock in the battery swap apparatus 100. These pieces of information will be described later. Selection of the battery 101 will be described in detail below.

### Battery Swap Method (Battery Selection Method)

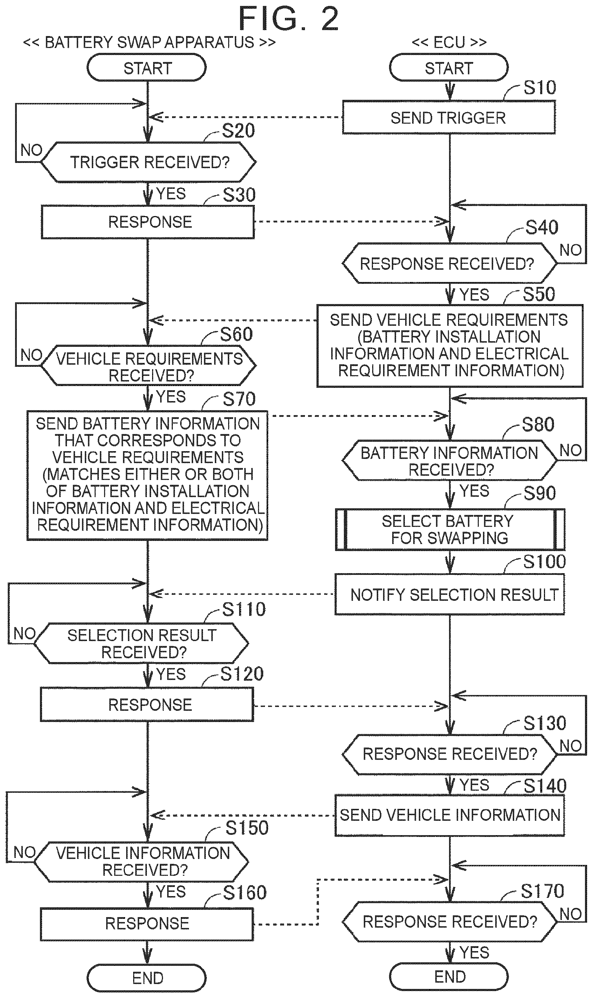

A battery swap method that is performed by the battery swap system 1 (battery selection method that is performed by the ECU 203) will be described with reference to the sequence diagram of FIG. 2. In the sequence shown in FIG. 2, the processor 203a controls a process of the ECU 203, and the processor 11 controls a process of the battery swap apparatus 100.

In step S10, the ECU 203 sends a trigger signal for starting battery swapping to the battery swap apparatus 100 via the communication device 202.

In step S20, the battery swap apparatus 100 determines whether the trigger signal of step S10 has been received. When the trigger signal has been received (Yes in S20), the process proceeds to step S30. When the trigger signal has not been received (No in S20), step S20 is repeated.

In step S30, the battery swap apparatus 100 sends a response to the trigger signal from the electrified vehicle 200 (signal acknowledging receipt of the trigger signal) to the electrified vehicle 200 via the communicator 13.

In step S40, the ECU 203 determines whether the response of step S30 has been received. When the response of step S30 has been received (Yes in S40), the process proceeds to step S50. When the response of step S30 has not been received (No in S40), step S40 is repeated.

In step S50, the ECU 203 sends vehicle requirements to the battery swap apparatus 100 through the communicator 203c and the communication device 202. The vehicle requirements include battery installation information regarding the battery installation position and battery placement direction in the electrified vehicle 200.

The information regarding the battery installation position includes information on the area in the electrified vehicle 200 where the battery is disposed (including information on the size and shape of the area), and information on the relative position of the area with respect to the vehicle body. The information regarding the battery placement direction includes position information of a connector that is connected to the battery in the electrified vehicle 200.

The vehicle requirements also include electrical requirement information regarding the electrical characteristics required of the battery 101. The electrical requirement information includes information on the voltage (upper limit value, lower limit value, and rated value) required of the battery 101. These various voltage values are values required based on the specifications of the electrified vehicle 200.

The electrical requirement information further includes information on the output power required of the battery 101 (lower limit value of the output power). The output power may be a predetermined value based on the specifications of the electrified vehicle 200, or may be a value that varies based on, for example, the travel history and travel plan (destination and planned travel route) of the electrified vehicle 200.

The electrical requirement information further includes information on the remaining capacity (state of charge (SOC)) required of the battery 101 (lower limit value of the remaining capacity etc.). The remaining capacity may be a predetermined value, or may be a value that varies based on, for example, the travel history and travel plan (destination and planned travel route) of the electrified vehicle 200.

In step S60, the battery swap apparatus 100 determines whether the vehicle requirements of step S50 have been received. When the vehicle requirements have been received (Yes in S60), the process proceeds to step S70. When the vehicle requirements have not been received (No in S60), step S60 is repeated.

In step S70, the battery swap apparatus 100 sends information on all the batteries 101 that correspond to the vehicle requirements (meet the vehicle requirements) of step S60 to the electrified vehicle 200 (ECU 203) via the communicator 13. Specifically, a battery 101 that corresponds to the vehicle requirements is such a battery 101 that at least one of the following factors is compatible with the electrified vehicle 200 (complies with the vehicle requirements): battery installation position, battery placement direction, voltage, output power, and capacity (remaining capacity). For example, a battery 101 whose voltage corresponds to the vehicle requirements may be a battery 101 whose voltage range falls within a voltage range corresponding to the vehicle requirements (electrical requirement information) (range between the upper and lower limit values), or a battery 101 whose rated voltage falls within a predetermined range (e.g., ±10%) centered on the rated voltage corresponding to the vehicle requirements (electrical requirement information). The criteria for determining the voltage compatibility are not limited to those in the above example.

In step S80, the ECU 203 determines whether the battery information in step S70 has been received. When the battery information has been received (Yes in S80), the process proceeds to step S90. When the battery information has not been received (No in S80), step S80 is repeated.

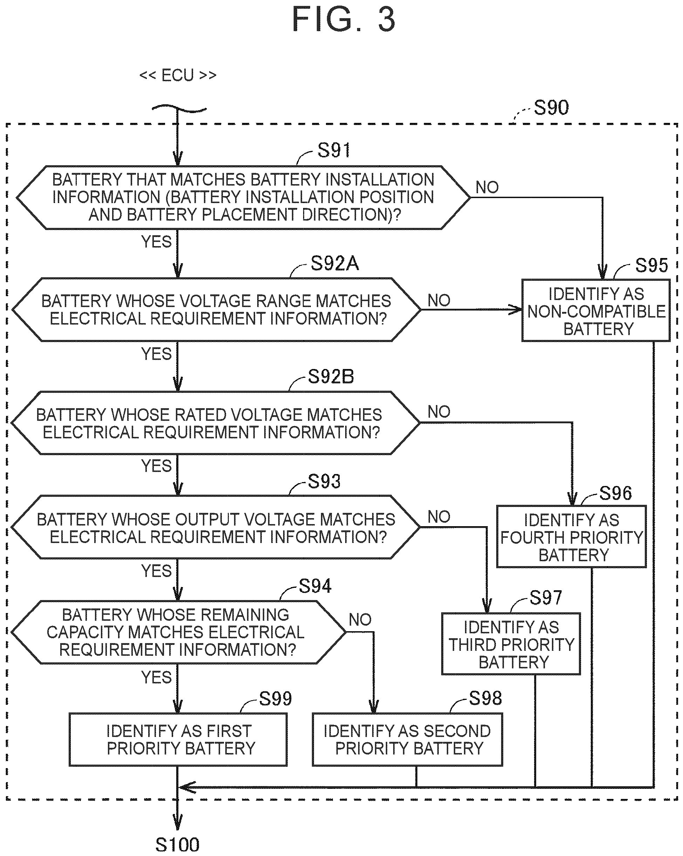

In step S90, the ECU 203 selects a battery 101 to be used for swapping from the batteries 101 included in the battery information in step S70. Specifically, the ECU 203 selects a battery 101 to be used for swapping using the battery installation information, the electrical requirement information, and the battery information of step S70. Step S90 will be described in detail later with reference to FIG. 3.

In step S100, the ECU 203 sends the selection result of step S90 to the battery swap apparatus 100 via the communicator 203c and the communication device 202.

In step S110, the battery swap apparatus 100 determines whether the selection result of step S100 has been received. When the selection result has been received (Yes in S110), the process proceeds to step S120. When the selection result has not been received (No in S110), step S110 is repeated.

In step S120, the battery swap apparatus 100 sends a response to the selection result of step S100 (signal acknowledging receipt of the selection result) to the electrified vehicle 200 via the communicator 13.

In step S130, the ECU 203 determines whether the response of step S120 has been received. When the response has been received (Yes in S130), the process proceeds to step S140. When the response has not been received (No in S130), step S130 is repeated.

In step S140, the ECU 203 sends individual vehicle information on the electrified vehicle 200 (hereinafter referred to as "vehicle information") to the battery swap apparatus 100 via the communicator 203c and the communication device 202. The vehicle information includes information unique to the electrified vehicle 200 (personal information such as vehicle identification number (VIN)) or license plate number).

In step S150, the battery swap apparatus 100 determines whether the vehicle information of step S140 has been received. When the vehicle information has been received (Yes in S150), the process proceeds to step S160. When the vehicle information has not been received (No in S150), step S150 is repeated.

In step S160, the battery swap apparatus 100 sends a response to the vehicle information of step S140 (signal acknowledging receipt of the vehicle information) to the electrified vehicle 200 via the communicator 13. Thereafter, the process of the battery swap apparatus 100 ends.

In step S170, the ECU 203 determines whether the response of step S160 has been received. When the response has been received (Yes in S170), the process ends. When the response has not been received (No in S170), step S170 is repeated.

After the electrified vehicle 200 enters an area in the battery swap apparatus 100 where battery swapping is performed, battery swapping is performed using the battery 101 selected in step S90.

### Process Flow of Step S90

FIG. 3 shows a detailed process flow of step S90 in FIG. 2. Step S90 includes steps S91 to S99. The ECU 203 selects a battery 101 to be used for swapping from the batteries 101 whose information has been sent in step S70. At this time, the ECU 203 selects a battery 101 to be used for swapping based on the following factors in the following priority order, from highest to lowest: battery installation information, information on voltage, information on output power, and information on capacity (remaining capacity). This will be described in detail below.

In step S91, the ECU 203 determines whether each battery 101 whose information has been sent in step S70 matches the battery installation information (battery installation position and battery placement direction) (whether each battery 101 whose information has been sent in step S70 is compatible with the electrified vehicle 200). When the battery 101 matches the battery installation information (Yes in S91), the process proceeds to step S92A. When the battery 101 does not match the battery installation information (No in S91), the process proceeds to S95.

In step S92A, the ECU 203 determines whether the voltage range (upper and lower limit values) of the battery 101 that satisfies the condition of step S91 (Yes in S91) matches the electrical requirement information (whether the battery 101 is compatible with the electrified vehicle 200). When the voltage range of the battery 101 matches the electrical requirement information (Yes in S92A), the process proceeds to step S92B. When the voltage range of the battery 101 does not match the electrical requirement information (No in S92A), the process proceeds to S95.

In step S92B, the ECU 203 determines whether the rated voltage of the battery 101 that satisfies the condition of step S92A (Yes in S92A) matches the electrical requirement information (whether the battery 101 is compatible with the electrified vehicle 200). When the rated voltage of the battery 101 matches the electrical requirement information (Yes in S92B), the process proceeds to step S93. When the rated voltage of the battery 101 does not match the electrical requirement information (No in S92B), the process proceeds to step S96.

In step S93, the ECU 203 determines whether the output power of the battery 101 that satisfies the condition of step S92B (Yes in S92B) matches the electrical requirement information (whether the battery 101 is compatible with the electrified vehicle 200). Specifically, it is determined whether the output power of the battery 101 is equal to or higher than the output power corresponding to the electrical requirement information. When the output power of the battery 101 matches the electrical requirement information (Yes in S93), the process proceeds to step S94. When the output power of the battery 101 does not match the electrical requirement information (No in S93), the process proceeds to step S97.

In step S94, the ECU 203 determines whether the remaining capacity of the battery 101 that satisfies the condition of step S93 (Yes in S93) matches the electrical requirement information (whether the battery 101 is compatible with the electrified vehicle 200). Specifically, it is determined whether the remaining capacity of the battery 101 is equal to or larger than the remaining capacity corresponding to the electrical requirement information. When the remaining capacity of the battery 101 does not match the electrical requirement information (No in S94), the process proceeds to step S98. When the remaining capacity of the battery 101 matches the electrical requirement information (Yes in S94), the process proceeds to step S99.

In step S95, the ECU 203 identifies the battery 101 that does not satisfy the condition of step 91 or 92A as a battery that does not comply with the vehicle requirements.

In step S96, the ECU 203 identifies the battery 101 that does not satisfy the condition of step 92B as a fourth priority battery.

In step S97, the ECU 203 identifies the battery 101 that does not satisfy the condition of step 93 as a third priority battery.

In step S98, the ECU 203 identifies the battery 101 that does not satisfy the condition of step 94 as a second priority battery.

In step S99, the ECU 203 identifies the battery 101 that satisfies the condition of step 94 as a first priority battery.

In step S 100 of FIG. 2, the ECU 203 may send only the information on the first priority batteries 101 to the battery swap apparatus 100. The ECU 203 may send only the information on one of the first priority batteries 101 (e.g., the first priority battery 101 with the largest remaining capacity or the first priority battery 101 with the highest state of health (SOH)) to the battery swap apparatus 100. When there is no first priority battery 101, information on the batteries 101 with the next highest priority (e.g., the second priority) is sent to the battery swap apparatus 100. The ECU 203 may send the information regarding the priorities of all the batteries 101 of step S70 to the battery swap apparatus 100.

When all of the batteries 101 are identified as batteries that do not comply with the vehicle requirements, the ECU 203 may notify the battery swap apparatus 100 that battery swapping will not be performed. Alternatively, the battery swap apparatus 100 that has received information indicating that none of the batteries 101 comply with the vehicle requirements may notify the electrified vehicle 200 that battery swapping will not be performed.

An image indicating that a battery 101 with a higher priority is a battery 101 with a higher level of recommendation for swapping may be displayed on a human-machine interface (HMI) mounted on the electrified vehicle 200. The battery 101 selected by the user on this image may be sent to the battery swap apparatus 100 as the selection result of step S100.

As described above, in the present embodiment, the ECU 203 selects a battery 101 to be used for swapping by using the battery installation information regarding the battery installation position and battery placement direction in the electrified vehicle 200, the electrical requirement information regarding the electrical characteristics required of the battery 101, and the battery information regarding each battery 101 that is in stock in the battery swap apparatus 100. This reduces the possibility that a battery 101 whose battery installation position and battery placement direction are not compatible with the electrified vehicle 200 may be selected, and also reduces the possibility that a battery 101 whose electrical characteristics are not compatible with the electrified vehicle 200 (and not suitable for the user's intended use) may be selected. As a result, it is possible to select a battery 101 that is more suitable for the electrified vehicle 200 (and the user's intended use) compared to the case where a battery 101 is selected based only on the type of battery.

The above embodiment illustrates an example in which the information on the batteries 101 that comply with at least one of the vehicle requirements is sent to the electrified vehicle 200. However, the present disclosure is not limited to this. The information on the batteries 101 that do not comply with the vehicle requirements may be sent to the electrified vehicle 200.

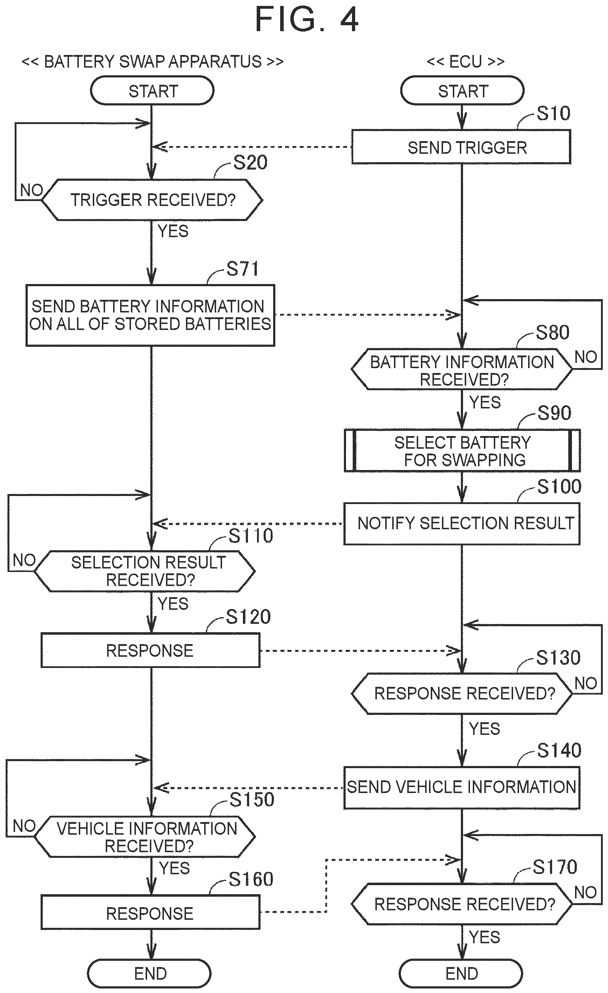

For example, sequence control shown in FIG. 4 may be performed. An example shown in FIG. 4 is different from the example shown in FIG. 2 in that step S71 is performed instead of step S70 and that steps S30 to S60 (see FIG. 2) are not performed. In step S71, the battery swap apparatus 100 sends battery information regarding all of the batteries 101 stored in the battery swap apparatus 100 (in stock in the battery swap apparatus 100) to the electrified vehicle 200 via the communicator 13.

The above embodiment illustrates an example in which a battery 101 whose voltage range (upper and lower limit values) does not comply with the vehicle requirements (electrical requirement information) is identified as a battery that does not comply with the vehicle requirements. However, the present disclosure is not limited to this. For example, a battery 101 whose voltage range does not comply with the vehicle requirements may be determined to be a fourth priority battery, like a battery 101 whose rated voltage does not comply with the vehicle requirements. Alternatively, a battery 101 whose voltage range does not comply with the vehicle requirements may be determined to be a fifth priority battery.

The above embodiment illustrates an example in which the priority of the output power of the battery 101 is higher than the priority of the remaining capacity of the battery 101. However, the present disclosure is not limited to this. The priority of the remaining capacity of the battery 101 may be higher than the priority of the output power of the battery 101. How the factors are prioritized may be set in advance in the electrified vehicle 200, or may be set as desired by the user. Alternatively, how the factors are prioritized may be automatically determined by the ECU 203 based on the travel information (travel history and travel plan) of the electrified vehicle 200.

The above embodiment illustrates an example in which the electrified vehicle 200 and the battery swap apparatus 100 communicate directly with each other. However, the present disclosure is not limited to this. For example, the electrified vehicle 200 and the battery swap apparatus 100 may communicate indirectly with each other via an external server.

The above embodiment illustrates an example in which the following factors for selecting a battery 101 to be used for swapping are prioritized in the following order, from highest to lowest: battery installation information, information on voltage, information on output power, and information on capacity. However, the present disclosure is not limited to this. The priority order may be other than that in the above example. For example, the voltage information may have a higher priority over the battery installation information.

The above embodiment illustrates an example in which the battery(ies) 101 is (are) stored in the battery swap apparatus 100. However, the present disclosure is not limited to this. The battery(ies) 101 to be used for swapping may be stored outside the battery swap apparatus 100.

The above embodiment illustrates an example in which a battery 101 is selected based on the battery installation position and the battery placement direction. However, the present disclosure is not limited to this. A battery 101 may be selected based on either the battery installation position or the battery placement direction. In other words, the battery installation position or the battery placement direction may not be considered when selecting a battery 101.

The above embodiment illustrates an example in which the selection result of the battery 101 to be used for swapping is sent from the electrified vehicle 200 to the battery swap apparatus 100. However, the present disclosure is not limited to this. The selection result by the electrified vehicle 200 may be sent from the mobile terminal 300 to the battery swap apparatus 100. Either or both of the battery installation information and the electrical requirement information may be sent from the mobile terminal 300 to the battery swap apparatus 100. In this case, the mobile terminal 300 is an example of the "vehicle-side control device" in the present disclosure.

The embodiment disclosed herein should be construed as illustrative in all respects and not restrictive. The scope of the present disclosure is set forth in the claims rather than in the above description of the embodiment, and is intended to include all modifications within the meaning and scope equivalent to those of the claims.

## Claims

1. A battery swap system (1) comprising:
a vehicle-side control device (203) configured to select a second battery to be swapped with a first battery installed in a vehicle; and
a battery swap apparatus (100) having at least one replacement battery in stock and configured to swap out the first battery for the second battery out of the at least one replacement battery, wherein the vehicle-side control device (203) is configured to
receive battery information regarding the at least one replacement battery from outside, and
select the second battery from the at least one replacement battery using battery installation information, electrical requirement information, and the battery information, the battery installation information being information regarding either or both of a battery installation position and a battery placement direction in the vehicle, and the electrical requirement information being information regarding an electrical characteristic required of the second battery.

2. The battery swap system (1) according to claim 1, wherein:
the electrical requirement information includes information on a voltage, an output power, and a capacity that are required of the second battery; and
the vehicle-side control device (203) is configured to select the second battery from the at least one replacement battery based on the following factors in the following priority order, from highest to lowest: (i) the battery installation information, (ii) the information on the voltage, (iii) either the information on the output power or the information on the capacity, and (iv) either the information on the output power or the information on the capacity, whichever is not the information of (iii).

3. The battery swap system (1) according to claims 1 or 2, wherein:
the vehicle-side control device (203) is configured to send the battery installation information and the electrical requirement information to the battery swap apparatus (100);
the battery swap apparatus (100) is configured to send to the vehicle-side control device (203) the battery information regarding the at least one replacement battery that matches either or both of the battery installation information and the electrical requirement information both received from the vehicle; and
the vehicle-side control device (203) is configured to select the second battery from the at least one replacement battery using the battery information received from the battery swap apparatus (100), the battery installation information, and the electrical requirement information.

4. A vehicle-side control device (203) configured to select a second battery to be swapped with a first battery installed in a vehicle, the vehicle-side control device (203) comprising:
a communicator (203c) configured to receive battery information regarding at least one replacement battery that is in stock in a battery swap apparatus (100) from outside; and
a controller (203a) configured to select the second battery from the at least one replacement battery using battery installation information, electrical requirement information, and the battery information, the battery installation information being information regarding either or both of a battery installation position and a battery placement direction in the vehicle, and the electrical requirement information being information regarding an electrical characteristic required of the second battery.

5. The vehicle-side control device (203) according to claim 4, wherein:
the electrical requirement information includes information on a voltage, an output power, and a capacity that are required of the second battery; and
the controller (203a) is configured to select the second battery from the at least one replacement battery based on the following factors in the following priority order, from highest to lowest: (i) the battery installation information, (ii) the information on the voltage, (iii) either the information on the output power or the information on the capacity, and (iv) either the information on the output power or the information on the capacity, whichever is not the information of (iii).

6. The vehicle-side control device (203) according to claims 4 or 5, wherein the communicator (203c) is configured to send the battery installation information and the electrical requirement information to outside the vehicle.

7. A battery selection method that is performed by a vehicle-side control device (203) configured to select a second battery to be swapped with a first battery installed in a vehicle, the battery selection method comprising:
receiving battery information regarding at least one replacement battery that is in stock in a battery swap apparatus (100); and
selecting the second battery from the at least one replacement battery using battery installation information, electrical requirement information, and the battery information, the battery installation information being information regarding either or both of a battery installation position and a battery placement direction in the vehicle, and the electrical requirement information being information regarding an electrical characteristic required of the second battery.
